Europäisches Patentamt

European Patent Office

Office européen des brevets

(11) Publication number: **0 501 157 A1**

# EUROPEAN PATENT APPLICATION

(21) Application number: **92101427.0**

(22) Date of filing: **29.01.92**

(51) Int. Cl.⁵: **A21C 1/14**

(30) Priority: **27.02.91 IT 50691**

(43) Date of publication of application:
**02.09.92 Bulletin 92/36**

(84) Designated Contracting States:
**AT BE CH DE DK ES FR GB GR IT LI LU MC
NL PT SE**

(71) Applicant: **BARILLA G. E R. F.LLI- Società per
Azioni
Viale Riccardo Barilla, 3/A
I-43100 Parma(IT)**

(72) Inventor: **Guarneri, Roberto
Via Sophia, 11
I-43100 Parma(IT)**
Inventor: **Alfieri, Eugenio
Via Volturno, 128
I-43100 Parma(IT)**

(74) Representative: **Vannini, Torquato et al
JACOBACCI-CASETTA & PERANI S.p.A. 7 Via
Visconti di Modrone
I-20122 Milan(IT)**

(54) An apparatus for making extruded pasta products under controlled dough conditions.

(57) An apparatus for continuously making extruded pasta products, such as spaghettis, comprising a device (26) for sensing the input power to an electric motor (19) which drives a screw (17) for forcing a dough through the extrusion plate (16), and a circuit (27) which generates a first signal indicative of the instantaneous value of the input power. The apparatus further comprises a circuit (28) comparing said signal with a reference signal whose value is indicative of the power that the motor (19) would absorb where the dough being extruded was in an optimum condition of texture. In the event that, from the comparison with the reference signal, a plus differential appears, the apparatus would operate the valving member (10) of the water feed line (9) to increase the flow, change the water-to-flour ratio, and make the dough texture thinner. On the contrary, the apparatus would operate the valving member (10) of the water feed line (9) to reduce the water infeed and thereby make the dough texture thicker. Thus, consistent quality can be ensured for the product, and the control arrangement, being based on detection of the input power to the motor (19), made to perform accurately and reliably.

This invention relates to an apparatus for making extruded pasta products on a continuous basis, comprising a vat wherein a dough is prepared by mixing ingredients which include fine flour and water, a water feed line and a flour feed line, a first servo-controlled valving member connected in said water feed line, a second servo-controlled valving member connected in said flour feed line, a cylinder with an extrusion plate on one end and a compression screw on its interior to define a pressure chamber located close against the extrusion plate, a conduit for delivering the dough from the vat into the compression cylinder, and a motor driving the compression screw.

Apparatus of the above-outlined type have been known in the specific technical field of extruded pasta, particularly spaghetti, making and are widely utilized in industrial plants for continuous, large volume production.

Well recognized is the difficulty encountered in such industrial plants to produce on a continuous basis a quality product, and above all one that would retain over time its quality features, tied as these are to the viscosity and texture conditions of the dough undergoing compression in the extrusion process.

Also recognized in this specific technical field is the existence of a highly critical, optimum texture or viscosity value for the dough to be extruded; a direct consequence being that, as this optimum value is departed from, adverse effects appear in both the extruder operation and the end product, which effects are enhanced where production is carried out on a continuous basis.

Any excess water supplied to the dough preparation stage, in fact, is apt to result, for instance, in the appearance of progressively larger dough lumps in the mixing vat, which lumps cause the extrusion cylinder to be loaded unevenly.

In this circumstance, the product exiting the extruder would have the form of distorted or sticky pasta. With spaghettis, for example, stretching may bring in reduced thickness, low homogeneity, and white specks on the end product.

Conversely, in default of the volume of feed water, the dough may develop too thick a texture.

In such a circumstance, the dough is bound to undergo overheating during compression, to the detriment of gluten and, hence, of the end product quality.

To obviate such drawbacks, and thus maintain optimum conditions for the dough texture, the prior art teaches control of the volumes of feed water and flour to suit the pressure generated in operation within the pressure chamber of the extruder, in view of that departure of this pressure above or below the pressure setting for optimum dough is either an indication of the dough being too thick or too thin, respectively.

The detection of the pressure generated within the compression chamber upstream of the extrusion plate, as taught by the prior art, has been found unreliable on account of the provision of a pressure signal in that area of the equipment being impractical, and of the high rate of wear to which conventional measuring instruments would then become subjected.

This invention object is, therefore, to provide a solution to the problems connected with detection of instantaneous conditions of the dough undergoing extrusion, using an apparatus which be highly reliable and accurate, and such as to enable prompt adjustment of the feeds, specifically water and flour, to the dough mixer.

This object is achieved by an apparatus as indicated being characterized in that it includes a sensor of the motor input power during the dough compression and extrusion steps, an electric circuit supplying a first signal corresponding to the instantaneous value of the motor input power, a circuit comparing said first signal with the set value of a reference signal to issue a plus or minus differential by generating a second signal tied to the appearance of a plus differential and a third signal tied to the appearance of a minus differential, said second and third signals being used to drive the servo of the valving member connected in the water feed line.

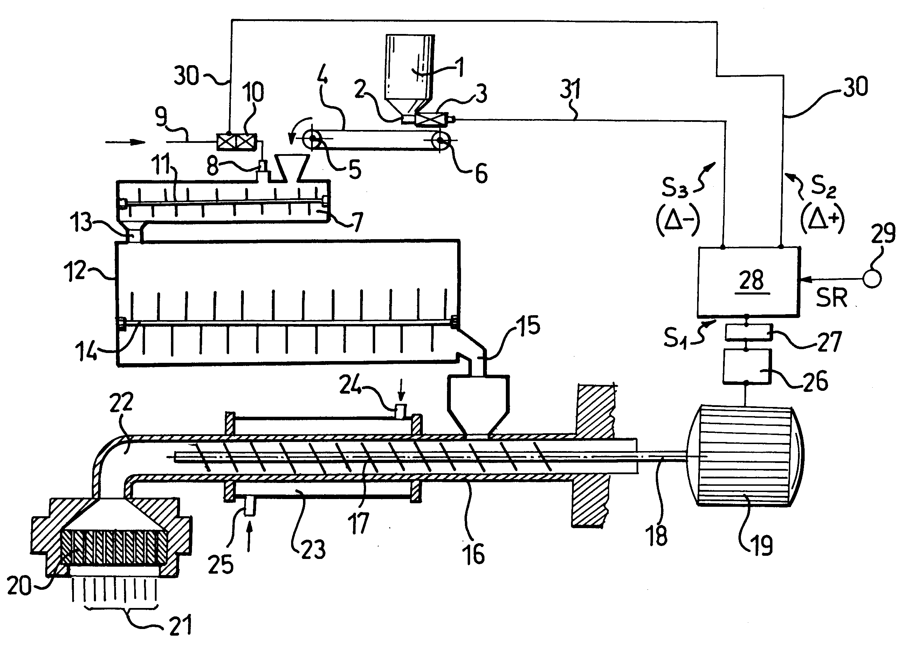

The invention will be now described in greater detail, by way of illustration and not of limitation, with reference to the accompanying drawing, whose single figure is a block diagram showing schematically a practical embodiment of this apparatus.

With refrence to the drawing, shown at 1 is a hopper containing fine flour and having its discharge port or feed line 2 controlled to open and close by a servo-controlled valving member 3.

The discharge port 2 opens towards a weighing conveyor belt 4 stretched between end rollers 5 and 6 and operative to transfer and unload the fine flour, by gravity in metered amounts, into the vat wherein the dough is formed.

Concurrently with the flour, through an injector 8 there is supplied a metered amount of water from the feed line 9. Connected in this line is a servo-controlled valving member 10.

Quite conventionally, the vat mixer 7 comprises a stirrer 11 and is followed by a vat mixer 12 into which the dough is delivered as it is being formed through an interconnection channel 13.

The vat mixer 12 is also conventionally provided with a paddle-type stirrer 14.

At the remote end from that where the dough enters the dressing vat 12, there is provided a connection conduit 15 to the extrusion cylinder 16 wherein a compression screw 17 is operated which has its shaft 18 coupled drivingly to an electric motor 19.

The free end of the extrusion cylinder 16 is conventionally equipped with an extrusion plate 20 whence the product, e.g. spaghettis, will issue as schematically shown at 21.

Upstream of the extrusion plate 20, there is provided, inside the cylinder 16, a pressure chamber 22 whereinto the dough is urged by the screw 17, and in which a required pressure to extrude the dough is created.

Provided around the cylinder 16, moreover, is a cooling jacket 23 through which a liquid coolant such as water can be circulated via fittings 24 and 25.

In accordance with this invention, connected to the electric motor 19 are a sensing device 26, known per se and adapted to sense the amount of power being absorbed, and an electric circuit 27 adapted to supply a first signal S1 which corresponds to the instantaneous value of the power input to the motor 19 during the dough extrusion.

This apparatus further comprises a circuit, designated 28, operative to compare the signal S1 from circuit 27 with a set value of a reference signal SR which can be controlled to suit the optimum conditions sought for the dough and is supplied to an input 29 to circuit 28.

This same circuit 28 operates to detect the plus differential delta+ or minus differential delta- obtained from the comparison of the signal from circuit 27 and the reference signal SR.

Where a plus differential (delta+) is detected, as a result of the signal indicative of the instantaneous input power exceeding the value of the reference signal SR, circuit 28 would generate a signal S2 which, through the circuit link 30, drives the servo-controlled valving member 10 in the water feed line.

In this condition, since the input power to the motor 19 grows proportionally with the texture of the dough being formed in the compression chamber 22, the signal S2 would open the valving member 10 further, thus admitting a larger flow of water to the dough-forming chamber 7. Conversely, with a minus differential (delta-), the signal would result in the water feed control member 10 being closed.

The signal S2 would be interrupted the moment signal S1, indicative of the instantaneous power being absorbed by the motor 19, coincides again with the reference signal SR set in circuit 28.

The last-mentioned condition would reflect the restoration of the dough present in the compression chamber 22 to an optimal texture condition for the pasta product sought.

The occurrence of a further up- or down-going change in the dough texture would result in a consequent change in the input power to the motor 19, and renewed operation of the circuit 28.

The signal S2 could also be generated proportionally to the amount of the delta+ or delta- differential, thereby making its action on the valving member 3 proportional in intensity or speed to the variation of the instantaneous input power from the reference value represented by optimum dough texture.

## Claims

1. An apparatus for making extruded pasta products on a continuous basis, comprising a vat wherein a dough is prepared by mixing ingredients which include fine flour and water, a water feed line and a flour feed line, a first servo-controlled valving member connected in said water feed line, a second servo-controlled valving member connected in said flour feed line, a cylinder with an extrusion plate on one end and a compression screw on its interior to define a pressure chamber located close against the extrusion plate, a conduit for delivering the dough from the vat into the compression cylinder, and a motor driving the compression screw, characterized in that it includes a sensor (26) of the motor (19) input power during the dough compression and extrusion steps, an electric circuit (27) supplying a first signal (S1) corresponding to the instantaneous value of the motor (19) input power, a circuit (28) comparing said first signal (S1) with the set value of a reference signal (SR) to issue a plus or minus differential by generating a second signal (S2) tied to the appearance of a plus differential (delta+) or minus differential (delta-), said second signal (S2) being passed to drive the servo-control of the valving member (10) connected in the water feed line (9).

2. An apparatus according to Claim 1, characterized in that said signals are proportional in value to the value of the plus or minus differential whereto they are tied as measured versus the value of the reference signal (SR).

EP 0 501 157 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DD-B-206 877 (HUMBOLDT UNIVERSITÄT ZU BERLIN DIREKT. FÜR FORSCHUNG) <br> * page 4, line 22 - page 5, line 21; claims 1-5 * | 1-2 | A21C1/14 |
| A | US-A-2 564 553 (HENRY WATERSTONE) <br> * column 1, line 1 - line 28 * <br> * column 3, line 47 - line 69 * | 1 | |
| A | WO-A-8 200 011 (GEBRÜDER BÜHLER AG) <br> * abstract; claim 1; figure 1 * <br> * page 6, line 10 - page 7, line 25 * | 1 | |
| A | GB-A-1 561 632 (SPILLERS LIMITED) <br> * claims 1-6 * | 1 | |

TECHNICAL FIELDS SEARCHED (Int. Cl.5)

A21C

The present search report has been drawn up for all claims

| Place of search | Date of completion of the search | Examiner |
|---|---|---|
| BERLIN | 01 JUNE 1992 | ALVAREZ ALVAREZ C. |